# EUROPEAN PATENT APPLICATION

(11) **EP 4 614 191 A1**
(43) Date of publication of application: **10.09.2025**
(21) Application number: 22964079.2
(22) Date of filing: 04.11.2022
(51) Int. Cl.: G01S 19/42, H04W 52/02

(54) **POSITIONING MEASUREMENT METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/130044
(87) International publication number: WO 2024/092775

(57) **Abstract**

The present disclosure relates to the technical field of mobile communications. Provided are a positioning measurement method and apparatus, a communication device and a storage medium. By means of a UE, the method can determine configuration information of a time window or configuration information of a timer and execute GNSS measurement on the basis of the configuration information of the time window or the configuration information of the timer, so as to ensure the timeliness of the terminal executing the GNSS measurement, thus avoiding additional power and resource consumption caused by GNSS failures.

## Description

### TECHNICAL FIELD

The disclosure relates to a field of mobile communication technology, in particular to a positioning measurement method, a positioning measurement apparatus, a communication device and a storage medium.

### BACKGROUND

Satellite access technology plays an important role in mobile network communication technology. In a satellite communication scenario, a terminal needs to know its own position information for uplink synchronization compensation. When the terminal's global navigation satellite system (GNSS) information expires, the terminal needs to enter into an idle state and re-execute a GNSS measurement. At present, it is possible to support a mechanism that a base station triggers the terminal to perform non-periodic GNSS measurement, but it is not clear how to perform GNSS measurement when the terminal fails to receive a trigger command from the base station.

### SUMMARY

The disclosure provides a positioning measurement method, a positioning measurement apparatus, a communication device and a storage medium, to realize a GNSS measurement method that is applicable to a satellite communication system, which ensures that a user equipment (UE) performs a GNSS operation in a timely manner, thereby avoiding additional power consumption due to GNSS failure.

According to a first aspect of embodiments of the disclosure, a positioning measurement method is provided. The method is performed by a UE and includes: determining configuration information of a time window or configuration information of a timer; and performing a GNSS measurement based on the configuration information of the time window or the configuration information of the timer.

In some embodiments of the disclosure, determining the configuration information of the time window or the configuration information of the timer, includes: determining predefined configuration information of a time window or predefined configuration information of a timer; or determining the configuration information of a time window or the configuration information of a timer from a higher-layer signaling or a physical layer signaling sent by a network device.

In some embodiments of the disclosure, the configuration information of the time window at least includes length information of the time window, and the time window indicates a length of time before the expiration of GNSS information, and the method further includes: sending a GNSS measurement request within the time window, in which the GNSS measurement request is used for requesting the network device to trigger the GNSS measurement.

In some embodiments of the disclosure, the GNSS measurement request includes GNSS indication information, and the GNSS indication information includes information relevant for determining a GNSS information expiration time.

In some embodiments of the disclosure, performing the GNSS measurement based on the configuration information of the time window, includes: in response to receiving an instruction for triggering the GNSS measurement sent by the network device within a preset duration, performing the GNSS measurement. The method further includes: in response to not receiving the instruction within the preset duration, entering an idle state after passing a GNSS information expiration time.

In some embodiments of the disclosure, the configuration information of the timer at least includes timing information and a starting condition of the timer, and performing the GNSS measurement based on the configuration information of the timer, includes: in a case that the starting condition of the timer is satisfied, starting the timer; and performing the GNSS measurement during a time period after the timer starts and before the timer expires.

In some embodiments of the disclosure, the method further includes: in a case that the GNSS measurement is completed within the time period, reporting new GNSS available length information; or, in a case that the GNSS measurement is not completed within the time period, entering an idle state after passing a GNSS information expiration time.

In some embodiments of the disclosure, the method further includes: during the time period, abstaining from performing at least one of downlink control signaling monitoring, uplink and downlink data reception, or channel measurement.

According to a second aspect of embodiments of the disclosure, a positioning measurement method is provided. The method is performed by a network device and includes: sending configuration information of a time window or configuration information of a timer to a UE, in which the configuration information of the time window or the configuration information of the timer is used for assisting the UE to perform a GNSS measurement.

In some embodiments of the disclosure, the configuration information of the time window at least includes length information of the time window, the time window indicates a length of time before GNSS information of the UE expires, and the method further includes: receiving a GNSS measurement request sent by the UE within the time window; and in response to the GNSS measurement request, triggering the GNSS measurement.

In some embodiments of the disclosure, in response to the GNSS measurement request, triggering the GNSS measurement, includes: sending an instruction for triggering the GNSS measurement to the UE within a preset duration, in which the instruction indicates the UE to perform the GNSS measurement.

In some embodiments of the disclosure, the method further includes: configuring the preset duration to the UE.

In some embodiments of the disclosure, the method further includes: receiving new GNSS available length information sent by the UE in a case that the UE completes the GNSS measurement within a time period after the timer starts and before the timer expires.

According to a third aspect of embodiments of the disclosure, a positioning measurement apparatus is provided. The apparatus is applied to a UE and includes: a processing module, configured to determine configuration information of a time window or configuration information of a timer, and perform a GNSS measurement based on the configuration information of the time window or the configuration information of the timer.

According to a fourth aspect of embodiments of the disclosure, a positioning measurement apparatus is provided. The apparatus is applied to a network device and includes: a transceiver module, configured to send configuration information of a time window or configuration information of a timer to a UE, in which the configuration information of the time window or the configuration information of the timer is used for assisting the UE to perform a GNSS measurement.

According to a fifth aspect of embodiments of the disclosure, a communication device is provided. The communication device includes: a transceiver, a memory and a processor connected to the transceiver and the memory, respectively. The processor is configured to control the transceiver to receive and transmit wireless signals by executing computer executable instructions stored on the memory, and the processor is capable of performing the method of the first aspect or the method of the second aspect.

According to a sixth aspect of embodiments of the disclosure, a computer storage medium is provided. The computer storage medium stores computer executable instructions, and when the computer executable instructions are executed by a processor, the method of the first aspect or the method of the second aspect is performed.

According to a seventh aspect of embodiments of the disclosure, a communication system is provided. The communication system includes: a network device and a UE. The UE is used for performing the method of the first aspect, and the network device is used for performing the method of the second aspect.

According to the positioning measurement method disclosed herein, the UE may determine the configuration information of the time window or the configuration information of the timer, and perform the GNSS measurement based on the configuration information of the time window or the configuration information of the timer, which ensures that the UE performs the GNSS measurement in a timely manner, thereby avoiding additional power and resource consumption due to GNSS failure.

Additional aspects and advantages of the disclosure will be given in part in the following description, become apparent in part from the following description, or be learned from the practice of the disclosure.

### BRIEF DESCRIPTION OF THE DRAWINGS

The foregoing and/or additional aspects and advantages of the disclosure will become apparent and easily understood from the following description of the embodiments in combination with the accompanying drawings.
FIG. 1 is a flowchart of a positioning measurement method according to an embodiment of the disclosure.
FIG. 2 is a flowchart of a positioning measurement method according to an embodiment of the disclosure.
FIG. 3 is a flowchart of a positioning measurement method according to an embodiment of the disclosure.
FIG. 4 is a flowchart of a positioning measurement method according to an embodiment of the disclosure.
FIG. 5 is a flowchart of a positioning measurement method according to an embodiment of the disclosure.
FIG. 6 is a flowchart of a positioning measurement method according to an embodiment of the disclosure.
FIG. 7 is a schematic diagram of a positioning measurement method according to an embodiment of the disclosure.
FIG. 8 is a block diagram of a positioning measurement apparatus according to an embodiment of the disclosure.
FIG. 9 is a block diagram of a positioning measurement apparatus according to an embodiment of the disclosure.
FIG. 10 is a block diagram of a positioning measurement apparatus according to an embodiment of the disclosure.
FIG. 11 is a schematic diagram of a communication device according to an embodiment of the disclosure.
FIG. 12 is a schematic diagram of a chip provided by an embodiment of the disclosure.

### DETAILED DESCRIPTION

Embodiments of the disclosure are described in detail below, examples of which are shown in the drawings, in which the same or similar reference numerals designate the same or similar elements or elements having the same or similar functions throughout. The embodiments described below by reference to the accompanying drawings are exemplary and are intended to explain the disclosure and should not be construed as limiting the disclosure.

The boundaries of real-life application scenarios of mobile network communication technology are expanding, such as the emergence of future-oriented augmented reality (AR), virtual reality (VR), and more new Internet applications (such as the Internet of Vehicles (IoV), the Internet of Things (IoT), etc.). The requirements for network communication quality and latency tolerance of each application scenario vary. For example, enhanced Mobile Broadband (eMBB) services focus on a large bandwidth and a high speed, Ultra-Reliable&Low Latency Communication (URLLC) services requires a higher reliability and a low delay, and the massive Machine Type Communication (mMTC) services mainly focuses on large number of connections. Therefore, the new generation of wireless communication system needs a flexible and configurable design to support transmissions of multiple service types.

In the study of wireless communication technology, satellite communication is considered to be an important aspect of future development of wireless communication technology development. Satellite communication refers to a communication performed by radio communication devices on the ground using satellites as relays. A satellite communication system includes a satellite portion and a terrestrial portion. Satellite communication is characterized by a large communication range; communication can be carried out between any two points as long as they are within a range covered by the radio waves emitted by the satellites; and it is not easily affected by terrestrial disasters (high reliability). Satellite communication can have the following benefits as a supplement to the current terrestrial cellular communication system:
(1) extended coverage, for areas that cannot be covered by the current cellular communication systems or areas with higher coverage costs, such as oceans, deserts, remote mountain areas, etc., satellite communication can be used to solve communication problems;
(2) emergency communication, in the event of a disaster, such as an earthquake, where cellular communication infrastructures are not available, satellite communication can be used to quickly establish communication connections; and
(3) provision of industrial applications, for example, for latency-sensitive services over long transmission distances, satellite communication can be used to reduce a transmission delay of service.

Therefore, in a future wireless communication system, the satellite communication system and the terrestrial cellular communication system will gradually achieve deep integration and truly realize the intelligent connection of all things.

In a satellite communication scenario, the presence of a long signal transmission distance between a transmitter and a receiver results in a larger deviation in uplink and downlink times. For transmissions with uplink and downlink relationships, Koffset has been introduced to compensate for transmission delay in the current standardization discussion. Koffset can be applied for various operations, such as physical uplink shared channel (PUSCH) transmission for downlink control information (DCI) scheduling, transmission of hybrid automatic repeat request (HARQ) feedback information and transmission of media access control control element (MAC CE).

In a satellite communication scenario, a terminal needs to know its own position information in order to perform compensation for uplink synchronization. For IoT UEs, a cellular module and a GNSS module do not currently support simultaneous operation. When GNSS information of the terminal expires, the terminal needs to enter an idle state and re-execute a GNSS measurement. In the existing methods, a base station can support a mechanism of triggering the terminal to perform non-periodic GNSS measurement mechanism. However, when the terminal fails to receive a trigger command sent by the base station, the terminal may not be able to perform the GNSS measurement.

In view of this, the disclosure provides a positioning measurement method, a positioning measurement apparatus, a communication device and a storage medium, to realize a GNSS measurement method that is applicable to a satellite communication system, which ensures that a terminal performs a GNSS operation in a timely manner, thereby avoiding additional power consumption due to GNSS failure.

It is understood that the scheme of the disclosure can be applied to satellite access networks, especially to communication scenarios where a UE, through satellite access networks, accesses core networks, including but not limited to 5th generation mobile communication technology (5G) core networks and core networks supporting future evolved communication technologies, such as long term evolution (LTE) technology, 5G-advanced technology, Sixth Generation (6G) technology, etc., which are not limited in the disclosure.

The disclosure includes, but is not limited to, smart terminals, cellular phones, wireless devices, handsets, mobile units, vehicles, in-vehicle devices, etc., which are not limited in the disclosure.

The network device in the embodiments of the disclosure is an entity on a network side for transmitting or receiving signals. For example, the network device may be an evolved NodeB (eNB), a transmission reception point (TRP), a next generation NodeB (gNB) in a new radio (NR) system, a base station in other future mobile communication systems, or an access node in a wireless fidelity (WiFi) system. The specific technology and specific device form adopted by the network device are not limited in the embodiments of the disclosure. The network device provided by the embodiments of the disclosure may be composed of a central unit (CU) and a distributed unit (DU). The CU may also be called a control unit. The use of CU-DU structure allows to divide a protocol layer of the network device, such as a base station, such that some of the protocol layer functions are placed in the CU for centralized control, and some or all of the remaining protocol layer functions are distributed in the DU, and the DU is centrally controlled by the CU. In embodiments of the disclosure, the network device is taken as a gNB as an example.

The scheme provided by the disclosure will be introduced in detail below in combination with the accompanying drawings.

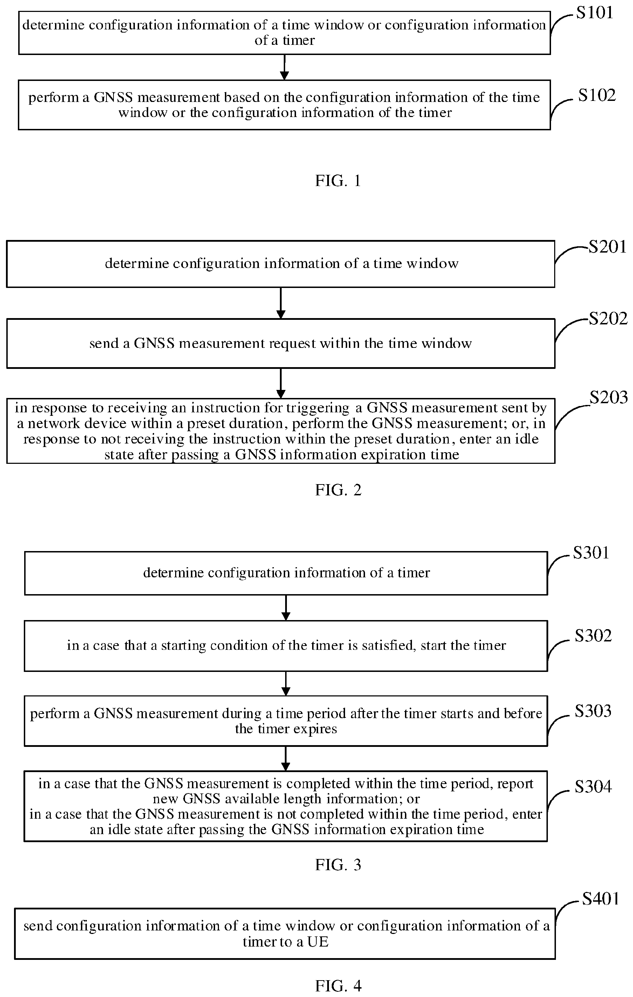

FIG. 1 is a flowchart of a positioning measurement method according to an embodiment of the disclosure. The method is performed by a UE, such as an IoT UE.

As illustrated in FIG. 1, the method includes the following steps.

At step S101, configuration information of a time window or configuration information of a timer is determined.

In embodiments of the disclosure, the configuration information of the time window or the configuration information of the timer is used to indicate information related to an expiry time of GNSS information. For example, the configuration information may directly indicate a GNSS information expiration time or may indicate information used to determine a GNSS information expiration time.

In the embodiments of the disclosure, the configuration information of the time window or the configuration information of the timer may be predefined or obtained by the UE from a received signaling sent by a network device or other devices. The signaling may be a higher-layer signaling, such as a radio resource control (RRC) signaling or a MAC CE signaling, or a physical layer signaling, which is not limited in the disclosure.

At step S102, a GNSS measurement is performed based on the configuration information of the time window or the configuration information of the timer.

In embodiment of the disclosure, the UE determines whether to perform the GNSS measurement and when to perform the GNSS measurement based on the determined configuration information of the time window or the configuration information of the timer. That is, the UE may determine the specific time to perform the GNSS measurement through the configuration information of the time window or the configuration information of the timer, which ensures that the UE performs the GNSS measurement in a timely manner, thereby avoiding additional power and resource consumption due to GNSS failure.

In conclusion, according to the scheme of the disclosure, the UE may determine the configuration information of the time window or the configuration information of the timer, and perform the GNSS measurement based on the configuration information of the time window or the configuration information of the timer, which ensures that the UE performs the GNSS measurement in a timely manner, thereby avoiding additional power and resource consumption due to GNSS failure.

With regard to the implementation of the embodiment shown in FIG. 1, the disclosure provides two optional implementations, which are described in detail below with reference to FIGS. 2 and 3, respectively.

FIG. 2 is a flowchart of a positioning measurement method according to an embodiment of the disclosure. The method is performed by a UE, based on the embodiment of FIG. 1, the present embodiment describes the scheme of performing a GNSS measurement according to configuration information of a time window. As illustrated in FIG. 2, the method includes the following steps.

At step S201, configuration information of a time window is determined.

In embodiments of the disclosure, step S201 specifically includes: determining predefined configuration information of the time window, or determining the configuration information of the time window from a higher-layer signaling or a physical layer signaling sent by a network device or other devices. That is, the configuration information of the time window may be predefined or may be obtained by the UE from a received signaling sent by the network device or other devices. The signaling may be a higher-layer signaling or a physical layer signaling, which is not limited in the disclosure.

In detail, in some optional embodiments, the configuration information of the time window may be explicitly send to the UE by the network device, e.g., via any of a system message, UE-specific RRC signaling, MAC CE signaling and physical layer signaling (e.g., DCI). That is, when the network device sends a system message, UE-specific RRC signaling, MAC CE signaling or DCI signaling to the UE, it carries the configuration information of the time window in it and sends it to the UE.

In some optional embodiments, the network device may send physical layer signaling (e.g., DCI) to the UE. The physical layer signaling includes an information field value, which is used to assist the UE in determining the configuration of the time window. In these embodiments, the UE may determine the configuration of the time window based on the information field value indicated by the base station and a correspondence between an information domain field and a configuration of the time window. It is understood that the above correspondence may be pre-defined in the UE or may be notified to the UE by the base station.

In the above two optional embodiments, there may be multiple configuration information of the time window. That is, the base station may indicate to the UE multiple configuration information of the time window, which may be selected by the UE, without limitation in the present disclosure.

In an embodiment of the disclosure, the configuration information of the time window at least includes length information of the time window, and the time window is used for indicating a length of time before GNSS information of the UE expires. That is, the time window is used to indicate a period of time before the GNSS information of the UE expires.

At step S202, a GNSS measurement request is sent within the time window.

In an embodiment of the disclosure, the GNSS measurement request is used to request the network device to trigger the GNSS measurement.

In an optional embodiment, the GNSS measurement request includes GNSS indication information, and the GNSS indication information includes information relevant for determining a GNSS information expiration time. That is, the GNSS measurement request contains indication information related to the terminal's GNSS, and the indication information contains information relevant for determining the GNSS information expiration time.

In another implementation, the GNSS measurement request contains indication information that indicates whether to request the GNSS measurement, and it may carry the indication information explicitly or implicitly.

For example, in a case of explicit carrying, the UE uselbit on the PUSCH or physical uplink control channel (PUCCH) to indicate whether to request the GNSS measurement. For example, "1" indicates to request the GNSS measurement, and "0" indicates that there is no need to request the GNSS measurement.

For another example, in a case of implicit carrying, it is possible to predefine a correspondence between whether or not to request a GNSS measurement and an existing transmission. The correspondence may be a correspondence whether an existing pilot or a transmission mode for date transmission including time-frequency domain position, scrambled sequence and other information fields request a GNSS measurement. The correspondence is predefined or determined by receiving configuration information from the network device or other devices.

At step S203, in response to receiving an instruction for triggering a GNSS measurement sent by a network device within a preset duration, the GNSS measurement is performed, or, in response to not receiving the instruction within the preset duration, an idle state is entered after passing the GNSS information expiration time.

In the embodiments of the disclosure, the UE may monitor the instruction to trigger the GNSS measurement sent by the network device or other devices within the preset duration. The preset duration may be a predefined time after the UE sends the GNSS measurement request. The preset duration may be predefined or may be determined by receiving the configuration information from the network device or other devices, which is not limited in the disclosure.

In response to receiving the instruction for triggering the GNSS measurement sent by the network device or other devices within the preset duration, the UE performs the GNSS measurement according to the instruction. In response to not receiving the instruction within the preset duration, the UE enters the idle state after the GNSS information expires.

It is understood that in an optional embodiment, the UE may perform the GNSS measurement upon receiving the instruction for triggering the GNSS measurement sent by the network device without setting the preset duration. In a possible embodiment, if the UE still does not receive the instruction for triggering the GNSS measurement before the GNSS information expires, it may directly perform the GNSS measurement.

In an optional embodiment of the disclosure, the UE may also report information about new GNSS available length to the network device or other devices after completing the GNSS measurement, which is not limited in the disclosure.

In conclusion, according to the scheme of the disclosure, the UE may determine the configuration information of the time window, send the GNSS measurement request within the time window based on the configuration information of the time window, and perform the GNSS measurement in response to receiving the instruction for triggering the GNSS measurement sent by the network device within the preset duration, which ensures that the UE performs the GNSS measurement in a timely manner, thereby avoiding additional power and resource consumption due to GNSS failure.

FIG. 3 is a flowchart of a positioning measurement method according to an embodiment of the disclosure. The method is performed by a UE, based on the embodiment of FIG. 1, the present embodiment describes the scheme of performing a GNSS measurement according to configuration information of a timer. As illustrated in FIG. 3, the method includes the following steps.

At step S301, configuration information of a timer is determined.

In embodiments of the disclosure, step S301 specifically includes: determining predefined configuration information of a timer, or determining configuration information of a timer from a higher-layer signaling or a physical layer signaling sent by a network device or other devices. That is, the configuration information of the timer may be predefined or may be obtained by the UE from the received signaling sent by the network device or other devices. The signaling may be a higher-layer signaling or a physical layer signaling, which is not limited in the disclosure.

In detail, in some optional embodiments, the configuration information of the timer may be explicitly sent to the UE by the network device, e.g., via any of system messages, UE-specific RRC signaling, MAC CE signaling and physical layer signaling (e.g., DCI). That is, when the network device sends a system message, UE-specific RRC signaling, MAC CE signaling or DCI signaling to the UE, it carries the configuration information of the timer in it and sends it to the UE.

In some optional embodiments, the network device may send physical layer signaling (e.g., DCI) to the UE. The physical layer signaling includes an information field value, which is used to assist the UE in determining a configuration of a timer. In these embodiments, the UE can determine the configuration of the timer according to the information field value indicated by the base station and a correspondence between the information field value and the configuration of the timer. It is understood that the above correspondence may be pre-defined in the UE or may be notified to the UE by the base station.

In the above two optional embodiments, there may be multiple configuration information of the timer. That is, the base station may indicate multiple configuration information of the timer to the UE, and the UE may make a selection, which is not limited in the disclosure.

In an embodiment of the disclosure, the configuration information of the timer at least includes timing information and a starting condition of the timer.

At step S302, in a case that the starting condition of the timer being satisfied, the timer is started.

In an embodiment of the disclosure, the UE may determine the starting condition of the timer in the configuration information of the timer, and starts the timer when the start condition is satisfied. The starting condition of the timer may be set for a specific communication scenario, which is not limited here.

At step S303, a GNSS measurement is performed during a time period after the timer starts and before the timer expires.

In an embodiment of the disclosure, the timing information in the configuration information of the timer may be a timing period, i.e., the length of time from when the timer is starts until the timer expires. Therefore, the UE may perform the GNSS measurement during the time period after the timer starts and before the timer expires.

It is understood that the length of the time period after the timer starts and before the timer expires may be less than or equal to a length of time for the GNSS information to expire. That is, the UE may perform the GNSS measurement before the GNSS information expires.

At step S304, in a case that the GNSS measurement is completed within the time period, new GNSS available length information is sent; or, in a case that the GNSS measurement is not completed within the time period, an idle state is entered after passing the GNSS information expiration time.

In some embodiments of the disclosure, if the UE completes the GNSS measurement before the timer expires, the UE reports the new GNSS available length information to the network device or other devices. If the UE fails to complete the GNSS measurement before the timer expires, the UE enters the idle state after the GNSS information expires.

In some optional embodiments of the disclosure, the method further includes: during the time period, abstaining from performing at least one of downlink control signaling monitoring, uplink and downlink data reception, or channel measurement. That is, when the UE performs the GNSS measurement, the UE does not perform downlink control signaling monitoring, uplink and downlink data reception, or channel measurement and other operations.

In conclusion, according to the scheme of the disclosure, the UE may determine the configuration information of the timer, starts the timer when the starting condition of the timer is satisfied based on the configuration information of the timer, and performs the GNSS measurement after the timer is started and before the timer expires, which ensures that the UE performs the GNSS measurement in a timely manner, thereby avoiding additional power and resource consumption due to GNSS failure.

FIG. 4 is a flowchart of a positioning measurement method according to an embodiment of the disclosure. The method is performed by a network device. As illustrated in FIG. 4, the method includes the following steps.

At step S401, configuration information of a time window or configuration information of a timer is sent to a UE.

The configuration information of the time window or the configuration information of the timer is used to assist the UE to perform a GNSS measurement.

In embodiments of the disclosure, the configuration information of the time window or the configuration information of the timer is used to indicate information related to GNSS information expiration time. For example, the network device may directly indicate the expiration time of the GNSS information or indicate information used to determine the expiration time of the GNSS information.

In the embodiments of the disclosure, the configuration information of the time window or the configuration information of the timer may be configured by the network device for the UE, for example, by carrying it in a signaling to be sent. The signaling may be a higher-layer signaling, such as an RRC signaling or a MAC CE signaling, or a physical layer signaling, which is not limited in the disclosure.

In the embodiments of the disclosure, the UE may determine whether to perform the GNSS measurement and when to perform the GNSS measurement based on the determined configuration information of the time window or the configuration information of the timer. That is, through the configuration information of the time window or the configuration information of the timer, the UE may determine the specific time to perform the GNSS measurement, which ensures that the UE performs the GNSS measurement in a timely manner, thereby avoiding additional power and resource consumption due to GNSS failure.

In conclusion, according to the scheme of the disclosure, the network device provides the UE with the configuration information of the time window or the configuration information of the timer to assist the UE to perform GNSS measurement, which ensures that the UE performs the GNSS measurement in a timely manner, thereby avoiding additional power and resource consumption due to GNSS failure.

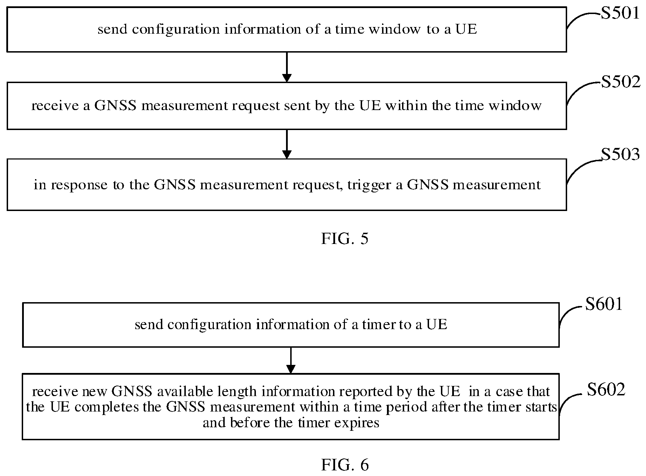

Corresponding to the method performed by the UE, the disclosure provides two optional implementations for the implementation of the embodiment shown in FIG. 4, which will be described in detail in FIG. 5 and FIG. 6, respectively.

FIG. 5 is a flowchart of a positioning measurement method according to an embodiment of the disclosure. The method is performed by a network device. Based on the embodiment shown in FIG. 4, this embodiment describes the scheme of configuring the configuration information of the time window to the UE by the network device. As illustrated in FIG. 5, the method includes the following steps.

At step S501, configuration information of a time window is sent to a UE.

In embodiments of the disclosure, the configuration information of the time window at least includes length information of the time window, and the time window is used to indicate a length of time before GNSS information of the UE expires. That is, the time window is used to indicate a period of time before the GNSS information of the UE expires.

In some optional embodiments, the network device may explicitly send the configuration information of the time window to the UE, e.g., via any of a system message, UE-specific RRC signaling, MAC CE signaling and physical layer signaling (e.g., DCI). That is, when the network device sends a system message, UE-specific RRC signaling, MAC CE signaling or DCI signaling to the UE, it carries the above configuration information of the time window in it and sends it to the UE.

In some optional embodiments, the network device may send physical layer signaling (e.g., DCI) to the UE. The physical layer signaling includes an information field value, which is used to assist the UE in determining the configuration of the time window. In these embodiments, the UE may determine the configuration of the time window based on the information field value indicated by the base station and a correspondence between an information field value and a configuration of the time window. It is understood that the above correspondence may be pre-defined in the UE or may be notified to the UE by the base station.

In the above two optional embodiments, there may be multiple configuration information of the time window. That is, the base station may indicate multiple configuration information of the time windows to the UE, which may be selected by the UE, which is not limited in the disclosure.

At step S502, a GNSS measurement request sent by the UE is received within the time window.

In an embodiment of the disclosure, the GNSS measurement request is used to request the network device to trigger a GNSS measurement.

In an optional embodiment, the GNSS measurement request includes GNSS indication information, and the GNSS indication information includes information relevant for determining a GNSS information expiration time. That is, the GNSS measurement request contains GNSS-related indication information related to the terminal's GNSS, and the indication information contains information relevant for determining the GNSS information expiration time.

In another implementation, the GNSS measurement request contains indication information that indicates whether to request the GNSS measurement, and it may carry the indication information explicitly or implicitly.

For example, in a case of explicit carrying, the UE uselbit on the PUSCH or physical uplink control channel (PUCCH) to indicate whether to request the GNSS measurement. For example, "1" indicates to request the GNSS measurement, and "0" indicates that there is no need to request the GNSS measurement.

For another example, in a case of implicit carrying, it is possible to predefine a correspondence between whether or not to request a GNSS measurement and an existing transmission. The correspondence may be a correspondence whether an existing pilot or a transmission mode for date transmission including time-frequency domain position, scrambled sequence and other information fields request a GNSS measurement. The correspondence relationship is predefined or determined by receiving configuration information from the network device or other devices.

At step S503, in response to the GNSS measurement request, a GNSS measurement is triggered.

In detail, the preset duration may be a predefined duration after the UE sends the GNSS measurement request. In an optional embodiment, the preset duration may be predefined or may be configured by the network device for the UE. The network device sends the instruction to trigger the GNSS measurement to the UE within the preset duration, and the instruction is used to instruct the UE to perform the GNSS measurement.

For example, in response to receiving the instruction for triggering the GNSS measurement sent by the network device or other devices within the preset duration, the UE performs the GNSS measurement according to the instruction. In response to not receiving the instruction within the preset duration, the UE enters the idle state after the GNSS information expires.

In conclusion, according to the scheme of the disclosure, the network device configures the configuration information of the time window to the UE, receives the GNSS measurement request sent by the UE within the time window, and send the instruction for triggering the GNSS measurement to the UE to indicate the UE to perform the GNSS measurement, which ensures that the UE performs the GNSS measurement in a timely manner, thereby avoiding additional power and resource consumption due to GNSS failure.

FIG. 6 is a flowchart of a positioning measurement method according to an embodiment of the disclosure. The method is performed by a network device. Based on the embodiment shown in FIG. 4, this embodiment describes the scheme of configuring the configuration information of the timer to the UE by the network device. As illustrated in FIG. 6, the method includes the following steps.

At step S601, configuration information of a timer is sent to a UE.

The configuration information of the timer may be configured by the network device to the UE via a signaling. The signaling may be a higher-layer signaling or a physical layer signaling, which is not limited in the disclosure.

In detail, in some optional embodiments, the configuration information of the timer may be explicitly sent to the UE by the network device, e.g., via any of system messages, UE-specific RRC signaling, MAC CE signaling and physical layer signaling (e.g., DCI). That is, when the network device sends a system message, UE-specific RRC signaling, MAC CE signaling or DCI signaling to the UE, it carries the configuration information of the timer in it and sends it to the UE.

In some optional embodiments, the network device may send a physical layer signaling (e.g., DCI) to the UE. The physical layer signaling includes an information field value, which is used to assist the UE in determining a configuration of a timer. In these embodiments, the UE can determine the configuration of the timer according to the information field value indicated by the base station and a correspondence between a information field value and a configuration of the timer. It is understood that the above correspondence may be pre-defined in the UE or may be notified to the UE by the base station.

In the above two optional embodiments, there may be multiple configuration information of the timer. That is, the base station may indicate multiple configuration information of the timers to the UE, and the UE may make a selection, which is not limited in the disclosure.

In an embodiment of the disclosure, the configuration information of the timer at least includes timing information and a starting condition of the timer. That is, the network device configures the starting condition of the timer to the UE, so that the UE may start the timer when the starting condition of the timer is satisfied. The starting condition of the timer may be set for a specific communication scenario, which is not limited here.

At step S602, new GNSS available length information sent by the UE after the timer starts and before the timer expires is received.

In an embodiment of the disclosure, the UE performs the GNSS measurement during a time period after the timer starts and before the timer expires. It is understood that the length of the time period after the timer starts and before the timer expires may be less than or equal to a length of time for the GNSS information to expire. That is, the UE may perform the GNSS measurement before the GNSS information expires.

In an embodiment of the disclosure, the network device receives the new GNSS available length information sent by the UE if the GNSS measurement is completed within the time period. That is, if the UE completes the GNSS measurement before the timer expires, the UE reports the new GNSS available length information to the network device or other devices.

In conclusion, according to the scheme of the disclosure, the network device configures the configuration information of the timer to the UE, and receive the new GNSS available length information sent by the UE after the GNSS measurement is completed, which ensures that the UE performs the GNSS measurement in a timely manner, thereby avoiding additional power and resource consumption due to GNSS failure.

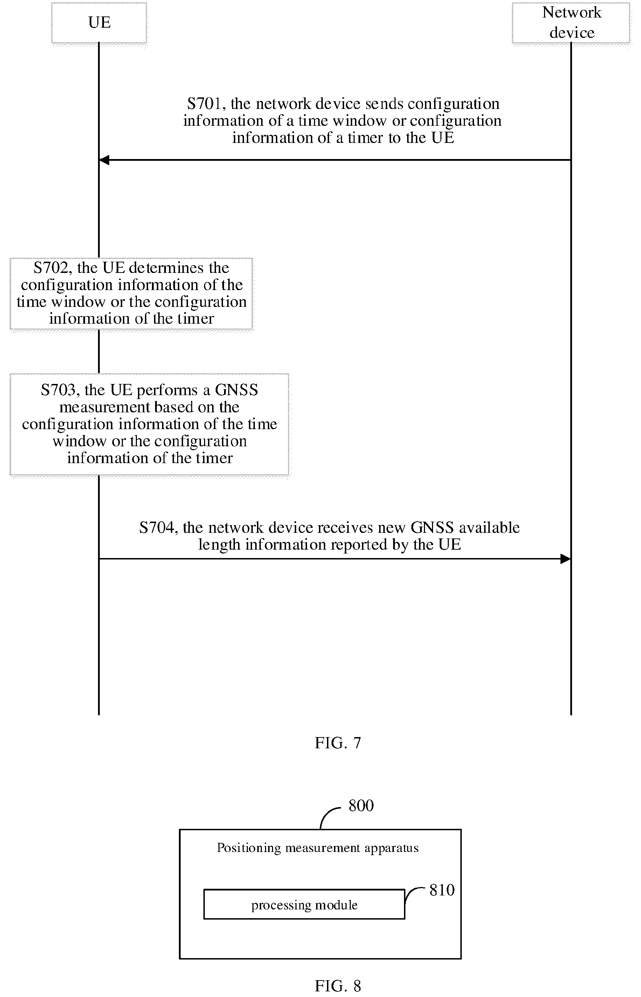

FIG. 7 is a schematic diagram of a positioning measurement method according to an embodiment of the disclosure. As illustrated in FIG. 7, this embodiment involves data/signaling interactions between a network device and a UE when performing the positioning measurement method. Based on the embodiment shown in FIGS. 1-6, the method includes the following steps.

At step S701, the network device sends configuration information of a time window or configuration information of a timer to the UE.

At step S702, the UE determines the configuration information of the time window or the configuration information of the timer.

At step S703, the UE performs a GNSS measurement based on the configuration information of the time window or the configuration information of the timer.

At step S704, the network device receives new GNSS available length information sent by the UE.

It is understood that step S701 is an optional step. The configuration information of the time window or the configuration information of the timer may be predefined, which is not configured by the network device for the UE. Step S704 is an optional step, which will not be repeated here.

For the principles of the above steps S701-S704 and the steps described in FIGS. 1-6 reference can be made to the relevant descriptions of FIGS. 1-6, which will not be repeated here.

In conclusion, according to the positioning measurement method provided by the embodiments of the disclosure, the UE can determine the configuration information of the time window or the configuration information of the timer, and perform the GNSS measurement based on the configuration information of the time window or the configuration information of the timer, which ensures that the UE performs the GNSS measurement in a timely manner, thereby avoiding additional power and resource consumption due to GNSS failure.

In the above embodiments of the disclosure, the methods provided by the embodiments of the disclosure are introduced from the perspectives of the network device and the UE, respectively. In order to realize the functions in the methods provided by the embodiments of the disclosure, the network device and the UE may include a hardware structure and a software module, and can realize the above functions in the form of the hardware structure, the software module, or a combination of the hardware structure and the software module. One of the above functions can be implemented in the form of the hardware structure, the software module, or a combination of the hardware structure and the software module.

Corresponding to the positioning measurement methods provided in the above embodiments, the disclosure also provides two corresponding positioning measurement apparatuses. Since the positioning measurement apparatuses provided in the embodiments of the disclosure correspond to the positioning measurement methods provided in the above embodiments, the implementations of the positioning measurement methods are also applicable to the positioning measurement apparatuses provided in the embodiments, which will not be described in detail in the embodiments.

FIG. 8 is a block diagram of a positioning measurement apparatus 800 according to an embodiment of the disclosure. The apparatus 800 is applicable to a UE.

As illustrated in FIG. 8, the apparatus 800 includes:
a processing module 810, configured to determine configuration information of a time window or configuration information of a timer.

The processing module 810 is further configured to: perform a GNSS measurement based on the configuration information of the time window or the configuration information of the timer.

According to the positioning measurement method provided by the embodiments of the disclosure, the UE can determine the configuration information of the time window or the configuration information of the timer, and perform the GNSS measurement based on the configuration information of the time window or the configuration information of the timer, which ensures that the UE performs the GNSS measurement in a timely manner, thereby avoiding additional power and resource consumption due to GNSS failure.

In some embodiments of the disclosure, the processing module 810 is further configured to: determine predefined configuration information of a time window or predefined configuration information of a timer; or determine configuration information of a time window or configuration information of a timer from a higher-layer signaling or a physical layer signaling sent by a network device.

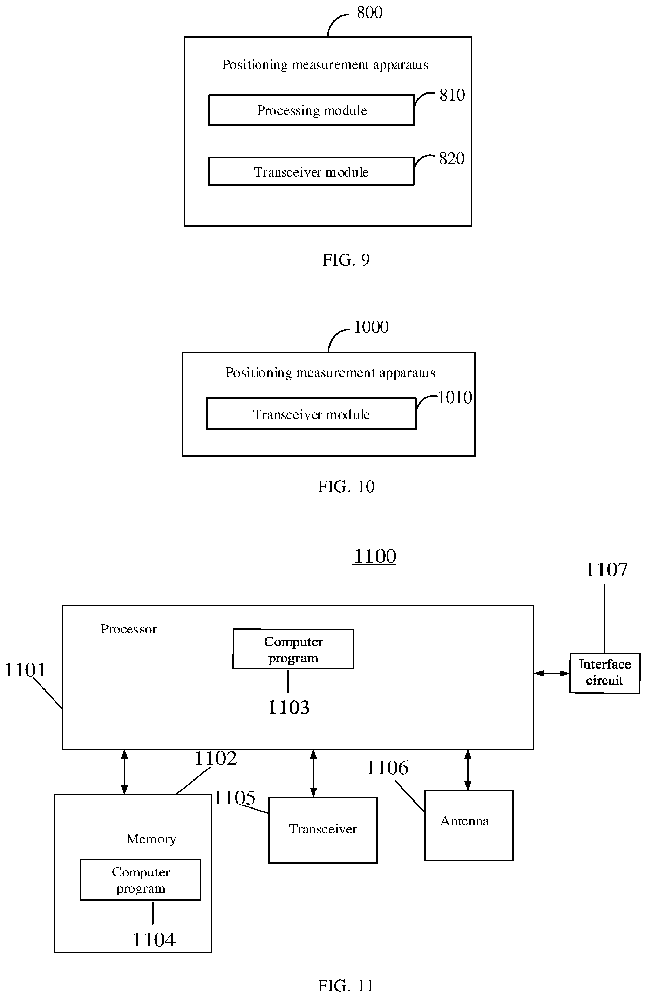

In some embodiments of the disclosure, the configuration information of the time window at least includes length information of the time window, and the time window is used for indicating a length of time before the GNSS information of the UE expires. As illustrated in FIG. 9, an apparatus 800 further includes: a transceiver module 820, configured to: send a GNSS measurement request within the time window, in which the GNSS measurement request is used for requesting the network device to trigger the GNSS measurement.

In some embodiments of the disclosure, the GNSS measurement request includes GNSS indication information, and the GNSS indication information includes information relevant for determining a GNSS information expiration time.

In some embodiments of the disclosure, the processing module 810 is further configured to: in response to receiving an instruction for triggering the GNSS measurement sent by the network device within a preset duration, perform the GNSS measurement, or, in response to not receiving the instruction within the preset duration, enter an idle state after the expiry time of the GNSS information.

In some embodiments of the disclosure, the configuration information of the timer at least includes timing information and a starting condition of the timer, and the processing module 810 is further configured to: in a case that the starting condition of the timer being satisfied, start the timer; and perform the GNSS measurement during a time period after the timer starts and before the timer expires.

In some embodiments of the disclosure, the processing module 810 is further configured to: in a case that the GNSS measurement is completed within the time period, report new GNSS available length information; or, in a case that the GNSS measurement is not completed within the time period, enter an idle state after the expiry time of the GNSS information.

In some embodiments of the disclosure, the processing module 810 is further configured to: during the time period, not perform at least one of downlink control signaling monitoring, uplink and downlink data reception, or channel measurement.

In conclusion, according to the positioning measurement method provided by the embodiments of the disclosure, the UE can determine the configuration information of the time window, send the GNSS measurement request within the time window based on the configuration information of the time window, and perform the GNSS measurement in response to receiving the instruction for triggering the GNSS measurement sent by the network device within the preset duration, which ensures that the UE performs the GNSS measurement in a timely manner. Alternatively, the UE may determine the configuration information of the timer, starts the timer when the starting condition of the timer is met based on the configuration information of the timer, and perform the GNSS measurement after the timer is started and before the timer expires, which ensures that the UE performs the GNSS measurement in a timely manner, thereby avoiding additional power and resource consumption due to GNSS failure.

FIG. 10 is a block diagram of a positioning measurement apparatus 1000 according to an embodiment of the disclosure. The apparatus 1000 is applicable to a network device.

As illustrated in FIG. 10, the apparatus 1000 includes:
a transceiver module 1010, configured to send configuration information of a time window or configuration information of a timer to a UE, in which the configuration information of the time window or the configuration information of the timer is used for assisting the UE to perform a GNSS measurement.

According to the positioning measurement method provided by the embodiments of the disclosure, the network device provides the UE with the configuration information of the time window or the configuration information of the timer to assist the UE to perform the GNSS measurement, which ensures that the UE performs the GNSS measurement in a timely manner, thereby avoiding additional power and resource consumption due to GNSS failure.

In some embodiments of the disclosure, the configuration information of the time window at least includes length information of the time window, the time window is used to indicate a length of time before the GNSS information of the UE expires. The transceiver module 1010 is further configured to: receive a GNSS measurement request sent by the UE within the time window; and in response to the GNSS measurement request, trigger the GNSS measurement.

In some embodiments of the disclosure, the transceiver module 1010 is further configured to: send an instruction for triggering the GNSS measurement to the UE within a preset duration, in which the instruction is used for indicating the UE to perform the GNSS measurement.

In some embodiments of the disclosure, the transceiver module 1010 is further configured to: configure the preset duration to the UE.

In some embodiments of the disclosure, the transceiver module 1010 is further configured to receive new GNSS available length information sent by the UE in a case that the UE completes the GNSS measurement within a time period after the timer starts and before the timer expires,.

In conclusion, according to the positioning measurement method provided by the embodiments of the disclosure, the network device configures the configuration information of the time window to the UE, receives the GNSS measurement request sent by the UE within the time window, and sends the instruction to trigger the GNSS measurement to the UE to instruct the UE to perform the GNSS measurement, which ensures that the UE performs the GNSS measurement in a timely manner. Alternatively, the network device configures the configuration information of the timer to the UE, and receives the new GNSS available length information sent by the UE after the GNSS measurement is completed, which ensures that the UE performs the GNSS measurement in a timely manner, thereby avoiding additional power and resource consumption due to GNSS failure.

The embodiments of the disclosure also provide a communication system, which is applied to a core network. The communication system may be a LTE system, a 5G system, a 5G NR system, or other future mobile communication systems.

The communication system includes a network device and a UE.

The UE is configured to perform the method of any one of the embodiments shown in FIGS. 1- 3 above.

The network device is configured to perform the method of any one of the embodiments shown in FIGS. 4- 6.

In conclusion, according to the positioning measurement method provided by the embodiments of the disclosure, the UE determines the configuration information of the time window or the configuration information of the timer, and perform the GNSS measurement based on the configuration information of the time window or the configuration information of the timer, which ensures that the UE can perform the GNSS measurement in a timely manner, thereby avoiding additional power and resource consumption caused by GNSS failure.

As illustrated in FIG. 11, FIG. 11 is a schematic diagram of a communication device 1100 provided by an embodiment of the disclosure. The communication device 1100 may be a network device, a UE, or a chip, a chip system or a processor that supports the network device to realize the above-described methods, or a chip, a chip system or a processor that supports the UE to realize the above-described methods. The device may be used to realize the methods described in the above method embodiments with reference to the descriptions of the above-described method embodiments.

The communication device 1100 includes one or more processors 1101. The processor 1101 may be a general purpose processor or a dedicated processor, such as, a baseband processor or a central processor. The baseband processor is used for processing communication protocols and communication data. The central processor is used for controlling the communication device (e.g., network side device, baseband chip, terminal, terminal chip, a CU, or a DU), executing computer programs, and processing data of the computer programs.

Optionally, the communication device 1100 may further include one or more memories 1102 on which computer programs 1104 are stored. When the processor 1101 executes the computer programs 1104, the communication device 1100 is caused to perform the methods described in the above method embodiments. Optionally, the memory 1102 also stores data. The communication device 1100 and the memory 1102 may be provided separately or may be integrated together.

Optionally, the communication device 1100 may also include a transceiver 1105 and an antenna 1106. The transceiver 1105 may be referred to as transceiver unit, transceiver machine, or transceiver circuit, for realizing a transceiver function. The transceiver 1105 may include a receiver and a transmitter. The receiver may be referred to as receiver machine or receiving circuit, for realizing a receiving function. The transmitter may be referred to as transmitter machine or transmitting circuit, for realizing a transmitting function.

Optionally, the communication device 1100 may also include one or more interface circuits 1107. The interface circuits 1107 are used to receive code instructions and transmit the code instructions to the processor 1101. The processor 1101 runs the code instructions to cause the communication device 1100 to perform the methods described in the method embodiments.

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1101 may store computer programs 1103. When the processor 1101 runs the computer programs 1103, the communication device 1100 is caused to perform the methods described in the method embodiments above. The computer programs 1103 may be solidified in the processor 1101, in which case the processor 1101 may be implemented by hardware.

In an implementation, the communication device 1100 may include circuits. The circuits may implement the sending, receiving or communicating function in the preceding method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described above in the embodiments may be a network device or a UE, but the scope of the communication device described in the disclosure is not limited thereto, and the structure of the communication device is not limited by FIG. 11. The communication device may be a stand-alone device or may be part of a larger device. For example, the communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

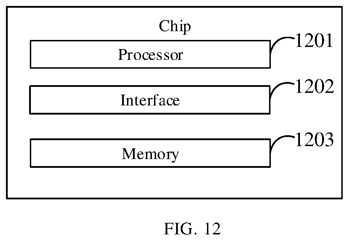

For the case where the communication device is a chip or a chip system reference can be made to the schematic diagram of the chip shown in FIG. 12. The chip shown in FIG. 12 includes a processor 1201 and an interface 1202. There may be one or more processors 1201, and there may be multiple interfaces 1202.

Optionally, the chip further includes a memory 1203 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementations should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer programs may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums, such as a server or a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the term "machine readable medium" or "computer readable medium" refers to any computer program product, equipment, and/or device (e.g., a magnetic disk, an optical disk, a memory, a programmable logic device (PLD)) for providing machine instructions and/or data to a programmable processor, such as a machine readable medium that receives machine instructions as machine readable signals. The term "machine readable signal" refers to any signal used to provide machine instructions and/or data to a programmable processor.

The systems and technologies described herein can be implemented in a computing system that includes back-end components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system including any combination of such back-end components, middleware components and front-end components. The components of the system may be interconnected by any form or medium of digital data communication (e.g., a communication network). Examples of communication networks include: a Local Area Network (LAN) and a Wide Area Network (WAN).

The computer system may include a client and a server. The client and server are generally remote from each other and interacting through a communication network. The client-server relation is generated by computer programs running on the respective computers and having a client-server relation with each other.

It is understandable that the steps can be reordered, added or deleted using various forms of the processes shown above. For example, the steps in the disclosure may be performed in parallel or sequentially or in different orders, as long as the desired results of the technical solutions disclosed in the disclosure are achieved, which are not limited herein.

In addition, it should be understood that the embodiments of the disclosure can be implemented independently or in combination with other embodiments if the scheme permits.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and for units described above reference may be made to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A positioning measurement method, performed by a user equipment (UE), comprising:
determining configuration information of a time window or configuration information of a timer; and
performing a global navigation satellite system (GNSS) measurement based on the configuration information of the time window or the configuration information of the timer.

2. The method of claim 1, wherein determining the configuration information of the time window or the configuration information of the timer comprises:
determining predefined configuration information of the time window or predefined configuration information of the timer; or
determining the configuration information of the time window or the configuration information of the timer from a higher-layer signaling or a physical layer signaling sent by a network device.

3. The method of claim 1 or 2, wherein the configuration information of the time window at least comprises length information of the time window, and the time window indicates a length of time before GNSS information of the UE expires, and the method further comprises:
sending a GNSS measurement request within the time window, wherein the GNSS measurement request is used for requesting the network device to trigger the GNSS measurement.

4. The method of claim 3, wherein the GNSS measurement request comprises GNSS indication information, and the GNSS indication information comprises information relevant for determining a GNSS information expiration time.

5. The method of claim 3 or 4, wherein performing the GNSS measurement based on the configuration information of the time window comprises:
in response to receiving an instruction for triggering the GNSS measurement sent by the network device within a preset duration, performing the GNSS measurement; and
the method further comprises:
in response to not receiving the instruction within the preset duration, entering an idle state after passing a GNSS information expiration time.

6. The method of any one of claims 1-5, wherein the configuration information of the timer at least comprises timing information and a starting condition of the timer, and performing the GNSS measurement based on the configuration information of the timer comprises:
in a case that the starting condition of the timer is satisfied, starting the timer; and
performing the GNSS measurement during a time period after the timer starts and before the timer expires.

7. The method of claim 6, further comprising:
in a case that the GNSS measurement is completed within the time period, reporting new GNSS available length information; or
in a case that the GNSS measurement is not completed within the time period, entering an idle state after passing a GNSS information expiration time.

8. The method of claim 6 or 7, further comprising:
during the time period, abstaining from performing at least one of downlink control signaling monitoring, uplink and downlink data reception, or channel measurement.

9. A positioning measurement method, performed by a network device, comprising:
sending configuration information of a time window or configuration information of a timer to a user equipment (UE),
wherein the configuration information of the time window or the configuration information of the timer is used for assisting the UE to perform a GNSS measurement.

10. The method of claim 9, wherein the configuration information of the time window at least comprises length information of the time window, the time window indicates a length of time before GNSS information of the UE expires, and the method further comprises:
receiving a GNSS measurement request sent by the UE within the time window; and
in response to the GNSS measurement request, triggering the GNSS measurement.

11. The method of claim 10, wherein in response to the GNSS measurement request, triggering the GNSS measurement comprises:
sending an instruction for triggering the GNSS measurement to the UE within a preset duration, wherein the instruction indicates the UE to perform the GNSS measurement.

12. The method of claim 11, further comprising:
configuring the preset duration to the UE.

13. The method of any one of claims 9-12, further comprising:
receiving new GNSS available length information reported by the UE in a case that the UE completes the GNSS measurement within a time period after the timer starts and before the timer expires.

14. A positioning measurement apparatus, comprising:
a processing module, configured to determine configuration information of a time window or configuration information of a timer, and perform a global navigation satellite system (GNSS) measurement based on the configuration information of the time window or the configuration information of the timer.

15. A positioning measurement apparatus, comprising:
a transceiver module, configured to send configuration information of a time window or configuration information of a timer to a user equipment (UE),
wherein the configuration information of the time window or the configuration information of the timer is used for assisting the UE to perform a GNSS measurement.

16. A communication device, comprising: a transceiver, a memory and a processor connected to the transceiver and the memory, respectively, wherein the processor is configured to control the transceiver to receive and transmit wireless signals by executing computer executable instructions stored on the memory, and the processor is capable of performing the method of any one of claims 1-13.

17. A computer storage medium having computer executable instructions stored thereon, wherein when the computer executable instructions are executed by a processor, the method of any one of claims 1-13 is performed.

18. A communication system, comprising:
a network device and a user equipment (UE),
wherein the UE is configured to perform the method of any one of claims 1-8; and
the network device is configured to perform the method of any one of claims 9-13.
